(19) Europäisches Patentamt
European Patent Office
Office européen des brevets

(11) **EP 3 677 865 B1**

(12) **EUROPEAN PATENT SPECIFICATION**

(45) Date of publication and mention
of the grant of the patent:
**06.11.2024 Bulletin 2024/45**

(21) Application number: **18858124.3**

(22) Date of filing: **07.09.2018**

(51) International Patent Classification (IPC):
***F28F 1/02*** *(2006.01)*

(52) Cooperative Patent Classification (CPC):
**F28F 1/022; F28D 1/0471; F28F 1/02; F28F 1/06;
F28F 1/08; F28F 1/426;** F28F 2001/027;
F28F 2260/02

(86) International application number:
**PCT/CN2018/104483**

(87) International publication number:
**WO 2019/056951 (28.03.2019 Gazette 2019/13)**

(54) **FLAT TUBE FOR MICROCHANNEL HEAT EXCHANGER, AND MICROCHANNEL HEAT EXCHANGER**

FLACHROHR FÜR MIKROKANALWÄRMETAUSCHER SOWIE MIKROKANALWÄRMETAUSCHER

TUBE PLAT POUR ÉCHANGEUR DE CHALEUR À MICROCANAUX, ET ÉCHANGEUR DE CHALEUR À MICROCANAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.09.2017 CN 201710866253**

(43) Date of publication of application:
**08.07.2020 Bulletin 2020/28**

(73) Proprietor: **Zhejiang Dunan Artificial Environment
Co., Ltd.
Shaoxing
Zhejiang 311835 (CN)**

(72) Inventor: **DONG, Hongzhou
Shaoxing
Zhejiang 311835 (CN)**

(74) Representative: **HGF
HGF Limited
1 City Walk
Leeds LS11 9DX (GB)**

(56) References cited:
**EP-A2- 1 022 532     WO-A1-2008/091918
CN-A- 101 050 925     JP-A- 2000 205 784
JP-A- 2004 003 855     JP-A- 2006 266 528
JP-A- 2012 149 789     JP-A- H0 719 774
JP-A- H09 310 989     JP-A- H1 019 494
JP-A- H1 085 879**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The invention relates to the field of air conditioners, and in particular to a flat tube for a microchannel heat exchanger and the microchannel heat exchanger.

## Background

At present, an air-cooled heat exchanger mainly involves in a copper-tube and aluminum-fin heat exchanger and an all-aluminum microchannel heat exchanger. In recent years, along with a continuous rise of a copper price, the copper-tube and aluminum-fin heat exchanger has been suffered challenges from more congeneric products, while the all-aluminum microchannel heat exchanger has been increasingly favored by the industry because of the price advantage, and is being gradually expanded from the field of automobile air conditioners to the field of household air conditioners and commercial air conditioners. However, a microchannel porous flat tube in the conventional art uses a melting-extruding process mostly, and an aluminum ingot needs to be molten secondarily, so the energy consumption is large, the cost is high and the technical threshold is high. Moreover, a flat tube extruded formation process in the conventional art makes the flat tube be of a linear structure merely. For a structure of a nonlinear heat exchanger, it is necessary to bend a core of the heat exchanger, which results in problems of easy extrusion, blocking, cracking and the like of a hole on the flat tube. In a reference document having the application No. "201611225638.0", a multichannel special-shaped flat tube is disclosed. The flat tube is formed by bending an aluminum plate for multiple times. Such a process solves the problems of large energy consumption, high cost, high technical threshold and the like of the extruded formation. But in a bending process, there are problems that a microchannel of the flat tube is blocked easily, a bending position is cracked easily, etc.

JP2004003855A discloses a flat tube for a heat exchanger made by certainly engaging plates with each other over the entire surfaces and having high heat exchange efficiency in that state, and also to provide its manufacturing method. The flat tube for the heat exchanger is formed by folding one plate or stacking two plates. The plate has a plurality of rows of long beads. The tops of the long beads are substantially flat, the top of each long bead is coupled to a plane part, and the long beads and the plane parts form a plurality of flow channels. A plurality of passage sections communicating with adjacent flow channels are formed at suitable places of the long beads formed over the longitudinal direction of the plates, the passage sections are set shorter than the length of the long beads, and the longitudinal size of the passage sections is set 10mm or shorter.

JPH09310989A discloses a flat heat transfer tube. A plurality of corrugated fins provided vertically adjacent flat heat transfer tubes, forming an upper surface for constituting respective flat heat transfer tubes flat on the entire surface, and brazing many protrusions formed on the upper surface of the lower plate to the lower surface of an upper plate. A flat heat transfer tube assembled in a heat exchanger is formed by butting and brazing the connecting parts formed in the entire length at both lateral edges of band-like plate material of aluminum alloy. In this case, many protrusions are formed by roll molding at a plate material on the upper surface of a lower plate for constituting the tube. The upper end faces of the protrusions are projected in contact with the lower surface of the upper pate of the tube, and brazed. The heat exchanger is constituted by providing an inlet side header and an outlet side header at both right and left ends of a core formed of the tube and corrugated fins alternately disposed in the vertical direction.

EP1022532A2 discloses flat tubes for use with heat exchanger and manufacturing method thereof. The height of a bead opposing a joint where side edges of a plate are to be joined is set to be smaller than the height of a bead which does not oppose the joint by the thickness of the plate. Further, lands are provided between the beads and protrude from either the tube surface or the tube surface toward the inside of the main tube unit, and flow gaps are formed through which the heat-exchange medium flows over the lands.

WO2008/091918A1 discloses a heat exchanger. The heat exchanger including a first flow path for a first working fluid, a second flow path for a second working fluid, a tube at least partially defining one of the first and second flow paths, and a corrugated insert secured to the tube and positioned along the first flow path. A structural deficit is provided at a location on the insert such that structural failures occur at the location in preference to other locations on the insert.

CN101050925A discloses a heat exchanger. The heat exchanger has tubes defining refrigerant passages therein and fins disposed between the tubes. The tubes have tube main walls opposed to each other. The fins are joined to the tube main walls. The tube main walls have projections that project inside of the tubes and define recesses on outer sides of the tubes. Each of the tubes has an outer dimension, in a direction perpendicular to the tube main walls, in a range between equal to or greater than 0.8 mm and equal to or less than.9 mm.

JPH0719774A discloses a flat tube. The flat tube of a heat exchanger having a construction wherein flat surfaces A and B formed to have an elliptical cross section by bending one plate in the shape of U on one end side and by joining it on the other end side and made to face each other are provided with a large number of round projections which project inward and the fore end parts of which come into contact with each other. Slender projections which project inward and the fore end parts of which come into contact with each other are provided at least in the vicinity of the U-shaped bent part on one end side of the two flat surfacesA andB, along the longitudinal direction of the tube.

JPH1019494A discloses a flat tube. A circular-arc-shaped curved part projecting inward is formed between continuous projecting parts in a plurality provided by forming continuous beads. The curved part is formed in a circular-arc-shaped projection toward the inside of a flat tube, and at the time of soldering, molten solder is led in between the curved part and a crest of the lower end of a waved fin, so that a fillet be formed in this part. Thereby the flat tube and the waved fin can be surely soldered. Since the flat tube is made to have an increased wall thickness by the solder led into the curved part, moreover, the pressure resistance thereof can be improved.

JP2000205784A discloses a heat exchanger flat tube. A row of beads arranged perpendicularly to a longitudinal direction in the heat exchanger flat tube and a row of beads are alternately arranged longitudinally. The bead is a columnar shape having along diameter while the bead is a columnar shape having a short diameter. The beads extending intermittently longitudinally form a plurality of flow passages as a main flow of a refrigerant while the beads disturbs a flow of the refrigerant in the flow passages. For this, heat exchange rate can be increased without increasing flow resistance, and hence pressure resistance of the heat exchanger flat tube can be improved with the longer diameter beads.

JP2006266528A discloses a flat tube. In the flat tube for the heat exchanger with the partitioning wall, the ratio of minor axis H and the major axis L of the cross section of the tube is 0.02-0.06, a number of spherical dimples as a part of the spherical shape are pressed and molded to an inner face of each flow channel, and the spherical dimples are alternately arranged on one-side plane and the other-side plane opposite to each other in the flow channel, so that they are arranged zigzag in a plan view.

JPH1085879A discloses a fin. A bending die is abutted on an inner bending circumferential surface side of a heat exchanger interposing a buffer for stress dispersion, e.g. a plate body made of spring steel. A header on one end side of the heat exchanger is held by a fixing jig and a header on the other side is clamped by a bending part of a bending device and pressed toward the bending die, the heat exchanger is bent along an arc-shaped die surface of the bending die. Because the bending force is dispersed by the plate body, even a flat heat exchange pipe can be bent in the direction of the major axis of its section without deforming a plate-shaped fin.

JP2012149789A discloses a heat exchanger. The heat exchanger includes a plurality of tubes each of which has a flat cross-sectional shape and allows fluid to flow therethrough and fins each of which is joined to a flat surface of each of the tubes to increase a heat exchange area with air flowing around the tubes. Each of tubes includes a plurality of outside projections projected from the flat surface to the outside, and a plurality of inside projections projected from the flat surface to the inside. The number of inside projections is smaller than that of outside projections. According to this, since the number of inside projections is smaller than that of outside projections, pressure loss of fluid flowing through the tubes to be caused by the inside projections can be reduced as compared with a conventional constitution where the inside projections are formed for the outside projections.

## Summary

The invention is set out in the appended set of claims.

In order to solve the above-mentioned problems, some embodiments of the invention provides a novel flat tube for a microchannel heat exchanger, to reduce a production cost and a production difficulty.

To achieve the above objective, the invention uses the following technical solutions.

An embodiment of the invention, a flat tube for a microchannel heat exchanger includes a first wallboard and a second wallboard that are formed separately, the first wallboard is connected to the second wallboard to form a refrigerant circulation cavity, the first wallboard has a plurality of protrusion portions protruding into the refrigerant circulation cavity to form multiple refrigerant channels, arranged along a length direction of the flat tube, in the refrigerant circulation cavity; or the second wallboard has a plurality of protrusion portions protruding into the refrigerant circulation cavity to form multiple refrigerant channels, arranged along a length direction of the flat tube, in the refrigerant circulation cavity; or the first wallboard and the second wallboard both have a plurality of protrusion portions protruding into the refrigerant circulation cavity to form multiple refrigerant channels, arranged along a length direction of the flat tube, in the refrigerant circulation cavity.

In an exemplary embodiment, the protrusion portions includes a first protrusion and a second protrusion, the first protrusion protrudes from the first wallboard to the second wallboard, the second protrusion protrudes from the second wallboard to the first wallboard, and the first protrusion and the second protrusion are abutted against each other and connected; or the protrusion portions includes a first protrusion and a second protrusion, the first protrusion protrudes from the first wallboard to the second wallboard, the second protrusion protrudes from the second wallboard to the first wallboard, the first protrusion is connected to the second wallboard, the second protrusion is connected to the first wallboard, and the first protrusion and the second protrusion are distributed in a staggered manner.

In an exemplary embodiment, a part of the first wallboard is recessed into the refrigerant circulation cavity to form the first protrusion, a part of the second wallboard is recessed into the refrigerant circulation cavity to form the second protrusion, and the first protrusion and the second protrusion are 0.3 mm-1.0 mm high.

In an exemplary embodiment, the first wallboard and the second wallboard are the same in structure.

In an exemplary embodiment, the protrusion portions protrudes from the first wallboard to the second wallboard, and the protrusion portions is connected to the second wallboard; or the protrusion portions protrudes from the second wallboard to the first wallboard, and the protrusion portions is connected to the first wallboard.

In an exemplary embodiment, the protrusion portions is formed by recessing a part of the first wallboard into the refrigerant circulation cavity; or the protrusion portions is formed by recessing a part of the second wallboard into the refrigerant circulation cavity, and the protrusion portions is 0.5 mm-1.2 mm high.

In an exemplary embodiment, there are multiple first protrusions and multiple second protrusions, any of three adjacent first protrusions of the multiple first protrusions on the first wallboard or any of three adjacent second protrusions of the multiple second protrusions on the second wallboard form an included angle

$$\theta = 2\arctan\frac{Lv}{Lh}$$

along a refrigerant flowing direction, where the Lv is a distance between two adjacent first protrusions of the multiple first protrusions along a width direction of the first wallboard or two adjacent second protrusions of the multiple second protrusions along a width direction of the second wallboard, and the Lh is a distance between the two adjacent first protrusions along a length direction of the first wallboard or the two adjacent second protrusions along a length direction of the second wallboard.

In an exemplary embodiment, the included angle $\theta$ is 60° -150° .

In an exemplary embodiment, when the protrusion portions is of a truncated cone-shaped, a top diameter Di of the protrusion portions and a bottom diameter Do of the protrusion portions meet: Do=Di+2*d*tan$\alpha$, the $\alpha$ being a draft angle of the protrusion portions.

In an exemplary embodiment, the draft angle is 10° -25° .

In an exemplary embodiment, there are multiple protrusion portions, the multiple protrusion portions are distributed at intervals along a length direction of the flat tube in the refrigerant circulation cavity, so as to form, between adjacent protrusion portions of the multiple protrusion portions, a space for allowing mutual circulation of a refrigerant in adjacent refrigerant channels.

In an exemplary embodiment, the first wallboard has a first groove sinking towards a direction away from the second wallboard, the second wallboard has a second groove sinking towards a direction away from the first wallboard, and a sidewall of the first groove is connected to a sidewall of the second groove to form the refrigerant circulation cavity.

In an exemplary embodiment, the sidewall of the first groove extends out of the first groove to form a first turnup, the sidewall of the second groove extends out of the second groove to form a second turnup, and the first turnup and the second turnup are connected to each other.

In an exemplary embodiment, the sidewall of the first groove and the sidewall of the second groove are at least partially overlapped to each other, and an overlapped portion is fixed by welding.

In an exemplary embodiment, the first wallboard has a groove sinking towards a direction away from the second wallboard, a sidewall of the groove extends out of the groove to form a turnup, and the turnup is connected to the second wallboard; or the second wallboard has a groove sinking towards a direction away from the first wallboard, a sidewall of the groove extends out of the groove to form a turnup, and the turnup is connected to the first wallboard.

In an exemplary embodiment, a thickness of the first wallboard and a thickness of the second wallboard are 0.2 mm-0.8 mm.

In addition, an exemplary embodiment of the invention further discloses a microchannel heat exchanger, which includes the above-mentioned flat tube.

In an exemplary embodiment, the microchannel heat exchanger is of a straight panel shape, a circular shape, a square shape, an L shape, a U shape or a V shape.

With the adoption of the above technical solutions, the invention has the following advantages.

1. According to the flat tube for the microchannel heat exchanger disclosed by the invention, a wallboard forms a refrigerant circulation cavity, and a protrusion formed by recessing the wallboard forms a microchannel for flowing a refrigerant. Such a structure may use a stamping-pressing formation technology. Compared with existing porous flat tube extruded formation, the stamping-pressing technology is simple, low in energy consumption, and low in technical threshold; and a heat exchanger producer may make a selection to independently produce or purchase it, thus reducing a purchasement cost of the flat tube and improving a pricing power.

2. The flat tube for the microchannel heat exchanger disclosed by the invention uses the stamping-pressing formation technology, so different molds may be designed to stamp a material, to form the microchannel flat tube having multiple internal structures. Compared with the existing porous flat tube extruded formation, the structure is flexible, the process is simple, and the reliability is high; and meanwhile, with the stamping formation, a bending operation turns out to be unnecessary, and the problems that the microchannel of the fat tube is easily blocked and cracked and the like in the bending operation are prevented.

3. The flat tube for the microchannel heat exchanger disclosed by the invention may be provided as a form in which two wallboards are symmetrical, so the two wallboards may be machined completely just by opening the mold once. Therefore, the production step is simplified, the mold opening expense is reduced, and the production cost is saved.

4. According to the flat tube for the microchannel heat exchanger disclosed by the invention, a turnup and a protrusion are in soldering connection, so the process is simple and reliable, and the sealing property is good; meanwhile, as the protrusion is connected to the wallboard, or connected to the protrusion, and a soldering process is used at a junction, the protrusion may bear a high pressure of the refrigerant; and by virtue of the soldering connection, a position of the protrusion may be prevented from being impacted by a high-pressure refrigerant to deform. Therefore, the reliability of the flat tube is improved, and the connection strength between the two wallboards is also enhanced.

5. According to the flat tube for the microchannel heat exchanger disclosed by the invention, since a space is provided between the protrusions in a length direction of the flat tube, a cavity of the flat tube is of a space structure to implement turbulent flowing in the tube more easily. Compared with an existing linear hole flat tube, the heat exchange in the tube may further be enhanced.

6. According to the flat tube for the microchannel heat exchanger disclosed by the invention, the wallboard forms the inward protruding protrusion by stamping, so a concave pit is arranged on a surface of the flat tube inevitably. Because of the concave pit, a channel is provided between a fin and the flat tube certainly due to incomplete welding. In a working condition of an evaporator and a heat pump, the heat exchanger tends to be installed vertically; and condensing water is gathered under the action of the gravity and flows down via the concave pit, to implement water drainage of the microchannel evaporator; and thus, the heat exchange efficiency is further improved.

7. When a height of each of multiple first protrusions and a height of each of multiple second protrusions are smaller than 0.3 mm, a cross section of a microchannel formed by them in the flat tube is very small; and in a welding process, the refrigerant channel is blocked by a welding flux easily, so that the refrigerant flows unsmoothly in the flat tube and the heat exchange efficiency is affected. When the height of the first protrusion and the height of the second protrusion are greater than 1.0 mm, because of excessively large heights of the protrusions, a degree of stretching the wallboard is higher, resulting in that the strength of the material is weakened and it is difficult to bear the pressure of the refrigerant. By the same reasoning for a third protrusion, when a height of the third protrusion is smaller than 0.5 mm, a cross section of a microchannel formed by the third protrusion and the first wallboard or the second wallboard in the flat tube is very small; and in a welding process, the refrigerant channel is blocked by the welding flux easily, so that the refrigerant flows unsmoothly in the flat tube and the heat exchange efficiency is affected. When the height of the third protrusion is greater than 1.2 mm, because of the excessively large height of the protrusion, a degree of stretching the wallboard is higher, resulting in that the strength of the material is weakened and it is difficult to bear the pressure of the refrigerant. Meanwhile, if the first wallboard and the second wallboard are excessively thick, the stamping is more difficult; and if the first wallboard and the second wallboard are excessively thin, both cannot bear the pressure of the refrigerant. Therefore, a thickness of 0.2 mm-0.8 mm is selected. In addition, the invention further discloses a microchannel heat exchanger, which includes the above-mentioned flat tube.

The beneficial effects achieved by the microchannel heat exchanger are the same as those of the above described flat tube, and will not be elaborated repeatedly herein by virtue of a similar derivative process.

These features and advantages of the invention will be disclosed in detail in the following specific embodiments and accompanying drawings. Preferred embodiments or means of the invention are described in detail in combination with the accompanying drawings but are not intended to form a limit to the technical solutions of the invention Additionally, these features, elements and components in the following description and accompanying drawings mean multiple features, elements and components. For the convenience of representation, different symbols or figures are marked, and all indicate a component having a same or similar structure or function.

**Brief Description of the Drawings**

The invention is further described below in combination with the accompanying drawings.

Fig. 1 is a schematic diagram of Embodiment 1 of the invention.
Fig. 2 is a top view of Embodiment 1 of the invention.
Fig. 3 is a schematic diagram of a first wallboard in Embodiment 1 of the invention.
Fig. 4 is a schematic diagram of a pressure angle in Embodiment 1 of the invention.
Fig. 5 is a cross-sectional view of Embodiment 1 of the invention.
Fig. 6 is a cross-sectional view of Embodiment 2 of the invention.
Fig. 7 is a cross-sectional view of Embodiment 3 of the invention.
Fig. 8 is a cross-sectional view of Embodiment 4 of the invention.
Fig. 9 is a schematic diagram of Embodiment 8 of the invention.
Fig. 10 is a schematic diagram of Embodiment 9 of the invention.
Fig. 11 is a schematic diagram of Embodiment 10 of the invention.
Fig. 12 is a schematic diagram of Embodiment 11 of the invention.
Fig. 13 is a schematic diagram of Embodiment 12 of the invention.
Fig. 14 is a schematic diagram of Embodiment 13 of the invention.

In the figures:

1.1-first wallboard, 1.2-second wallboard, 1.3-first protrusion, 1.4-second protrusion, 1.5-first turnup, 1.6-second turnup, 1.7-collection tube, 1.8-fin, 1.9-baffle plate, and 1.10-connection tube;
2.1-first wallboard, 2.2-second wallboard, 2.3-third protrusion, 2.4-first turnup, and 2.5-second turnup;
3.1-first wallboard, 3.2-second wallboard, 3.3-first protrusion, 3.4-second protrusion, and 3.5-third turnup; and
4.1-first wallboard, 4.2-second wallboard, 4.3-third protrusion, and 4.4-third turnup.

## Detailed Description of the Embodiments

The technical solutions in the embodiments of the invention are explained and described below in combination with the accompanying drawings in the embodiments of the invention. However, the following embodiments are merely preferred embodiments, rather than all embodiments, of the invention All other embodiments obtained by a person of ordinary skill in the art based on the embodiments of the invention without creative efforts shall pertain to the protection scope of the invention.
Reference throughout this specification to "an embodiment" or "instance" or "example" means that a particular feature, structure or characteristic described in connection with the embodiment is included in at least one embodiment of the invention. The appearances of the phrase "in an embodiment" in various places throughout this specification are not necessarily referring to the same embodiment of the invention.
In the description of the embodiments of the invention, orientation or position relationships indicated by the terms "upper", "lower", "left", "right", "horizontal", "vertical", "inner", "outer", etc. are based on the orientation or position relationships as shown in the drawings, for ease of the description of the invention only, rather than indicating that the invention must be constructed and operated in a particular orientation. Therefore, these terms should not be understood as a limitation to the invention.

Embodiment 1

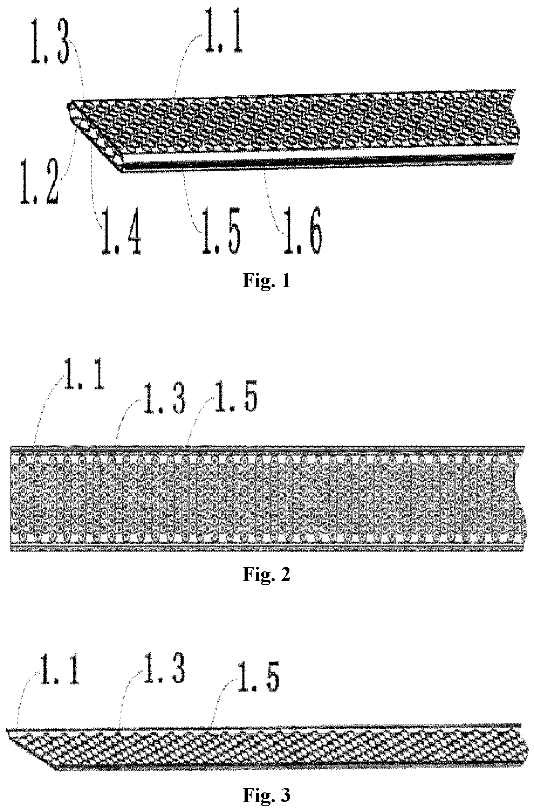

The embodiment provides a microchannel heat exchanger. As shown in Fig. 1 to Fig. 5, a microchannel heat exchanger includes a first wallboard 1.1 and a second wallboard 1.2 that are formed separately; and the first wallboard 1.1 and the second wallboard 1.2 are opposite to each other, with a thickness t of 0.2 mm. The first wallboard 1.1 sinks towards a direction away from the second wallboard 1.2 to form a first groove (not labeled in the figure), the second wallboard 1.2 sinks towards a direction away from the first wallboard 1.1 to form a second groove (not labeled in the figure), and the first groove and the second groove form a refrigerant circulation cavity. First protrusions 1.3 are disposed on the first wallboard 1.1. Second protrusions 1.4 are disposed on the second wallboard 1.2. Each of the first protrusions 1.3 is of a truncated cone-shaped and may also be of a strip shape and other shapes. In this embodiment, each of the first protrusions 1.3 is of the truncated cone-shaped preferably and uniformly distributed on a bottom wall of the first groove. Each of the second protrusions 1.4 is of the truncated cone-shaped, and uniformly distributed on a bottom wall of the second groove. In this embodiment, a height d of each of the first protrusions 1.3 and a height d of each of the second protrusions 1.4 are 0.3 mm. A top diameter Di of each of the first protrusions 1.3 and a top diameter Di of each of the second protrusions 1.4 are 0.8 mm-1.5 mm, and a bottom diameter $Do = Di + 2*d*\tan\alpha$, where the $\alpha$ is a draft angle for the first protrusions 1.3 and the second protrusions 1.4. In this embodiment, the draft angle $\alpha$ is $10° - 25°$. In this way, on one hand, a problem of poor circulation of a refrigerant due to an excessively small channel in a flat tube may be prevented to improve the heat exchange efficiency; and on the other hand, by means of a reasonable design of a top diameter, a bottom diameter and a draft angle of a protrusion, a connection strength of a wallboard may be guaranteed, and thus a first protrusion and a second protrusion can bear a large pressure of the refrigerant after being connected.
In this embodiment, two sidewalls of the first groove extend out of the first groove to form two first turnups 1.5, and two sidewalls of the second groove extend out of the second groove to form two second turnups 1.6. In this embodiment, the first protrusions 1.3 and the first turnups 1.5 are formed by stamping the first wallboard 1.1, and the second protrusions 1.4 and the second turnups 1.6 are formed by stamping the second wallboard 1.2. Compared with the existing porous flat tube extruded formation, the stamping-pressing technology is simple, low in energy consumption and low in technical threshold; and a heat exchanger producer may make a selection to independently produce or purchase it, thus reducing a purchasement cost of the flat tube and improving a pricing power. Meanwhile, in different use occasions, different molds may be designed according to different working conditions to stamp the wallboard, to form the microchannel flat tube having multiple internal structures to be suitable for different demands. Compared with the existing porous flat tube extruded formation, the structure is flexible, the process is simple, and the reliability is high; and meanwhile, with the stamping formation, a bending operation turns out to be unnecessary, and the problems that the microchannel of the fat tube is easily blocked and cracked and the like in the bending operation are prevented. The first protrusions 1.3 and the second protrusions 1.4 are the same in shape, quantity and position, and the first turnups 1.5 and the second turnups 1.6 are the same in shape and position. As a result, the first wallboard 1.1 and the second wallboard 1.2 are symmetrical. The two wallboards may be machined completely just by opening a mold once. Therefore, the production step is simplified, the mold opening expense is reduced, and the production cost is saved. The first wallboard 1.1 is connected to the second wallboard 1.2, the two first turnups 1.5 are in soldering connection with the two turnups 1.6, and a top surface of each of the first protrusions 1.3 is in soldering connection with a top surface of each of the second protrusions 1.4, so the process is simple and reliable, and the sealing property is good. Meanwhile, the top surface of the first protrusions 1.3 and the top surface of the second protrusions 1.4 are abutted against each other and also in soldering connection, so that the first protrusions 1.3 and the second protrusions 1.4 may bear a high pressure of the refrigerant. By virtue of the soldering connection, the first protrusions 1.3 and the second protrusions 1.4 may be prevented from being impacted by a high-pressure refrigerant to deform. Therefore, the reliability of the flat tube is improved, and the connection strength between the first wallboard 1.1 and the second wallboard 1.2 is also enhanced.

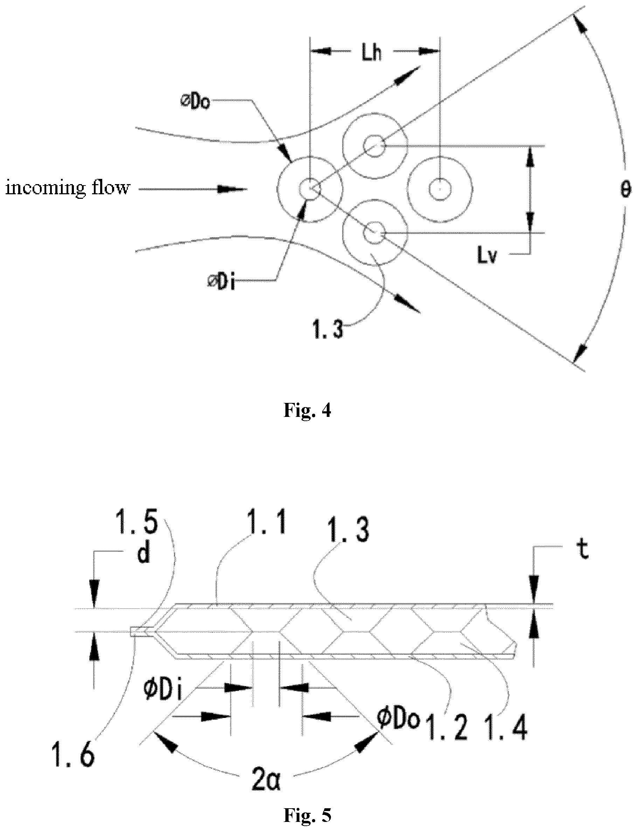

As shown in Fig. 4, there are multiple first protrusions and multiple second protrusions, an included angle formed by any of three adjacent first protrusions of the first protrusions 1.3 on the first wallboard or any of three adjacent second protrusions of the second protrusions on the second wallboard along a flow direction of the refrigerant is defined as an incoming-flow pressure angle $\theta$,

$$\theta = 2\arctan\frac{Lv}{Lh}$$

, where the Lv is a distance between two adjacent first protrusions of the multiple first protrusions along a width direction of the first wallboard or two adjacent second protrusions of the multiple second protrusions along a width direction of the second wallboard, and the Lh is a distance between the two adjacent first protrusions along a length direction of the first wallboard or the two adjacent second protrusions along a length direction of the second wallboard. The incoming-flow pressure angle $\theta$ has an impact on a tube-pass pressure drop and the heat exchange efficiency. In this embodiment, the incoming-flow pressure angle $\theta$ may be 60°-150°. In actual applications, an appropriate incoming-flow pressure angle may be selected as required by the heat exchange efficiency. For example, when a high heat exchange efficiency is required, a large incoming-flow pressure angle should be used, such as $\theta$ = 90°-150°, to improve the heat exchange efficiency by means of increasing a pressure drop. Reversely, for a demand having a restriction on the pressure drop, a small incoming-flow pressure angle should be used, such as $\theta$=60°-90°.

Additionally, a strength factor $\varphi$ is defined to represent a pressurization behavior of a tube pass of the flat tube. The $\varphi$ is affected by the distance Lv between two adjacent protrusions along the width direction of the wallboard, the distance Lh between two adjacent protrusions along the length direction of the wallboard, and the top diameter Di of the protrusion, specifically,

$$\varphi = \frac{2*Lv*Lh}{\pi*Di^2}$$

. In this embodiment, in order to guarantee the connection strength of the wallboard, the $\varphi$ is 13-20.

For an assembled flat tube, on a length direction, the protrusion portions are formed by multiple first protrusions 1.3 and multiple second protrusions 1.4 by soldering connection forms multiple refrigerant channels in a refrigerant circulation cavity formed by the first groove and the second groove. As each of the first protrusions 1.3 and each of the second protrusions 1.4 are of the truncated cone-shaped, a space for allowing the refrigerant in adjacent refrigerant channels to circulate to each other forms between adjacent protrusion portions of the multiple protrusion portions. Consequently, a cavity of the flat tube is of a space structure, which is easier to implement turbulent flowing in the tube. Compared with an existing linear hole flat tube, the heat exchange in the tube may further be enhanced.

The first protrusions 1.3 and the second protrusions 1.4 are formed by stamping, so a panel surface of the first wallboard 1.1 and a panel surface of the second wallboard 1.2 sink into the refrigerant circulation cavity to form multiple concave pits. Because of the concave pits, a plurality of channels are provided between a fin and the flat tube certainly due to incomplete welding. In a working condition of an evaporator and a heat pump, the heat exchanger tends to be installed vertically; and condensing water is gathered under the action of the gravity and flows down via the concave pit, to implement water drainage of the microchannel evaporator; and thus, the heat exchange efficiency is further improved.

Embodiment 2

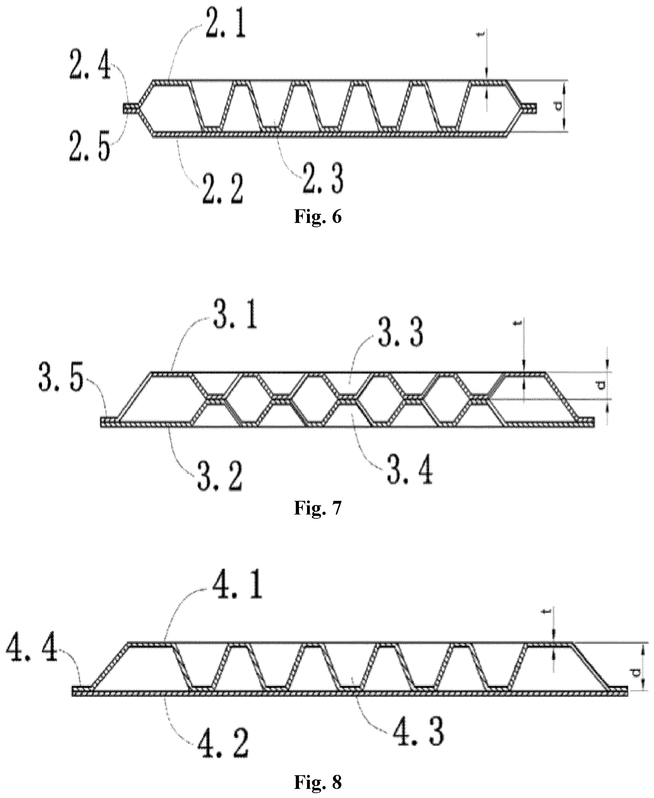

As shown in Fig. 6, different from Embodiment 1, a microchannel heat exchanger in this embodiment includes a first wallboard 2.1 and a second wallboard 2.2 that are formed separately; and the first wallboard 2.1 and the second wallboard 2.2 are opposite to each other. In this embodiment, the first wallboard 2.1 and the second wallboard 2.2 have a thickness t of 0.2 mm. The first wallboard 2.1 sinks towards a direction away from the second wallboard 1.2 to form a first groove, the second wallboard 2.2 sinks towards a direction away from the first wallboard 2.1 to form a second groove, and the first groove and the second groove form a refrigerant circulation cavity. Multiple third protrusions 2.3 are disposed on the first wallboard 2.1. Each of the third protrusions 2.3 is of a truncated cone-shaped and is uniformly distributed on a bottom wall of the first groove. In this embodiment, a height d of each of the third protrusions 2.3 is 0.5 mm. Two sidewalls of the first groove extend out of the first groove to form two first turnups 2.4, and two sidewalls of the second groove extend out of the second groove to form two second turnups 2.5. In this embodiment, the third protrusions 2.3 and the two first turnups 2.4 are formed by stamping the first wallboard 2.1, the second turnups 2.5 are formed by stamping the second wallboard 2.2, the two first turnups 2.4 are in soldering connection with the two second turnups 2.5, and a top surface of each of the third protrusion 2.3 is in soldering connection with a plate surface of the second wallboard 2.2.

Embodiment 3

As shown in Fig. 7, different from Embodiment 1, a microchannel heat exchanger in this embodiment includes a first wallboard 3.1 and a second wallboard 3.2 that are formed separately; and the first wallboard 3.1 and the second wallboard 3.2 are opposite to each other. In this embodiment, the first wallboard 3.1 and the second wallboard 3.2 have a thickness t of 0.8mm. The first wallboard 3.1 sinks towards a direction away from the second wallboard 3.2 to form a first groove, the second wallboard 3.2 is a flat plate, multiple first protrusions 3.3 are disposed on the first wallboard 3.1, multiple second protrusions 3.4 are disposed on the second wallboard 3.2, each of the first protrusion 3.3 is of a truncated cone-shaped and is uniformly distributed on a bottom wall of the first groove, each of the second protrusion 3.4 is also of the truncated cone-shaped, and each of the second protrusion 3.4 and each of the first protrusion 3.3 are the same in shape, quantity and position. In this embodiment, a height d of each of the first protrusions 3.3 and a height d of each of the second protrusions 3.4 are 1.0 mm. Two sidewalls of the first groove extend out of the first groove to form two third turnups 3.5. In this embodiment, the first protrusions 3.3 and the third turnups 3.5 are formed by stamping the first wallboard 3.1, the second protrusions 3.4 are formed by stamping the second wallboard 3.2, the third turnups 3.5 are directly in soldering connection with a plate surface of the second wallboard 3.2, and a top surface of the first protrusions 3.3 are in soldering connection with a top surface of the second protrusions 3.4.

Embodiment 4

As shown in Fig. 8, different from Embodiment 1, a microchannel heat exchanger in this embodiment includes a first wallboard 4.1 and a second wallboard 4.2 that are formed separately; and the first wallboard 4.1 and the second wallboard 4.2 are opposite to each other. In this embodiment, a thickness t of the first wallboard 4.1 and a thickness t of the second wallboard 4.2 are 0.6mm. The first wallboard 4.1 sinks towards a direction away from the second wallboard 4.2 to form a first groove. The second wallboard 4.2 is a flat plate. Multiple third protrusions 4.3 are disposed on the first wallboard 4.1. Each of the third protrusions 4.3 is of a truncated cone-shaped and is uniformly distributed on a bottom wall of the first groove. In this embodiment, a height d of each of the third protrusions 4.3 is 1.2mm. Two sidewalls of the first groove extend out of the first groove to form two third turnups 4.4. In this embodiment, the third protrusions 4.3 and the third turnups 4.4 are formed by stamping the first wallboard 4.1, the third turnups 4.4 are directly in soldering connection with a plate surface of the second wallboard 4.2, and a top surface of each of the third protrusions 4.3 is in soldering connection with a plate surface of the second wallboard 4.2.

Embodiment 5

Different from Embodiment 1, in this embodiment, a thickness of a first wallboard and a thickness of a second wallboard are 0.4 mm; multiple first protrusions are disposed on the first wallboard; multiple second protrusion are disposed on the second wallboard; both each of the first protrusions and each of the second protrusions are of a truncated cone-shaped; a height of each of the first protrusions is 1.0 mm, with a top surface of each of the first protrusions in soldering connection with the second wallboard; a height of each of the second protrusion is 1.0 mm, with a top surface of each of the second protrusions in soldering connection with the first wallboard; and the first protrusions and the second protrusions are arranged in a staggered manner, to form multiple refrigerant channels arranged along a length direction of a flat tube.

Embodiment 6

Different from Embodiment 1, in this embodiment, a thickness of a first wallboard and a thickness of a second wallboard are 0.5 mm, and a height of each of multiple first protrusions and a height of each of multiple second protrusions are 0.8 mm. A sidewall of the first groove and a sidewall of the second groove are at least partially overlapped to each other, and an overlapped portion is fixed by soldering connection.

Embodiment 7

Different from Embodiment 2, in this embodiment, a thickness of a first wallboard and a thickness of a second wallboard are 0.5 mm, and a height of each of multiple third protrusions is 1.0 mm.

Embodiment 8

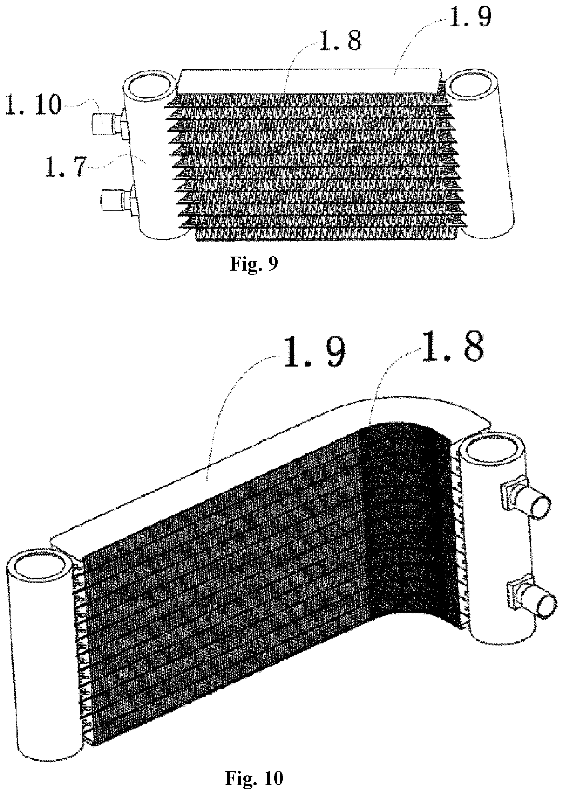

As shown in Fig. 9, the embodiment provides a microchannel heat exchanger, including two collection tubes 1.7; multiple connection tubes 1.10 connected to a refrigeration system are disposed on one collection tube 1.7; multiple flat tubes described in Embodiment 1 are connected between the two collection tubes 1.7; a wavy fin 1.8 is disposed between adjacent flat tubes to increase a heat dissipation area; and meanwhile, the fin 1.8 is also disposed on outside surfaces of two flat tubes located on end portions of the collection tubes 1.7, and the fin 1.8 herein is protected by a baffle plate 1.9 to prevent deformation and damage of the fin 1.8. The microchannel heat exchanger in this embodiment is of a straight panel shape.

Embodiment 9

As shown in Fig. 10, different from Embodiment 8, a microchannel heat exchanger in this embodiment is of an L shape. The L-shaped microchannel heat exchanger is formed by bending a flat tube and a baffle plate 1.9 on a length direction. A fin 1.8 is disposed between the flat tube and the flat tube as well as between the flat tube and the baffle plate 1.9.

Embodiment 10

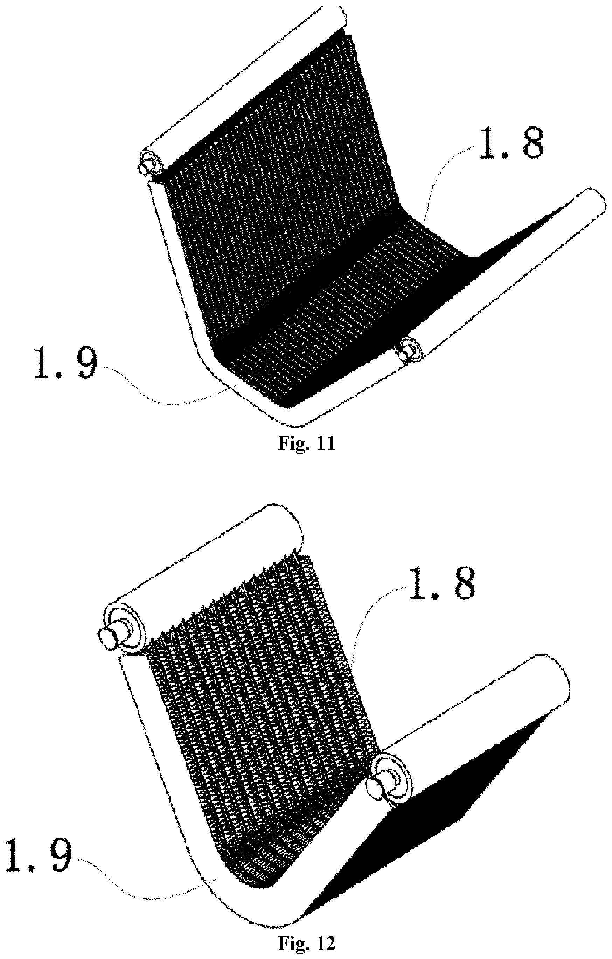

As shown in Fig. 11, different from Embodiment 8, a microchannel heat exchanger in this embodiment is of a U shape. The U-shaped microchannel heat exchanger is formed by bending a flat tube and a baffle plate 1.9 on a length direction. A fin 1.8 is disposed between the flat tube and the flat tube as well as between the flat tube and the baffle plate 1.9.

Embodiment 11

As shown in Fig. 12, different from Embodiment 8, a microchannel heat exchanger in this embodiment is of a V shape. The V-shaped microchannel heat exchanger is formed by bending a flat tube and a baffle plate 1.9 on a length direction. A fin 1.8 is disposed between the flat tube and the flat tube as well as between the flat tube and the baffle plate 1.9.

Embodiment 12

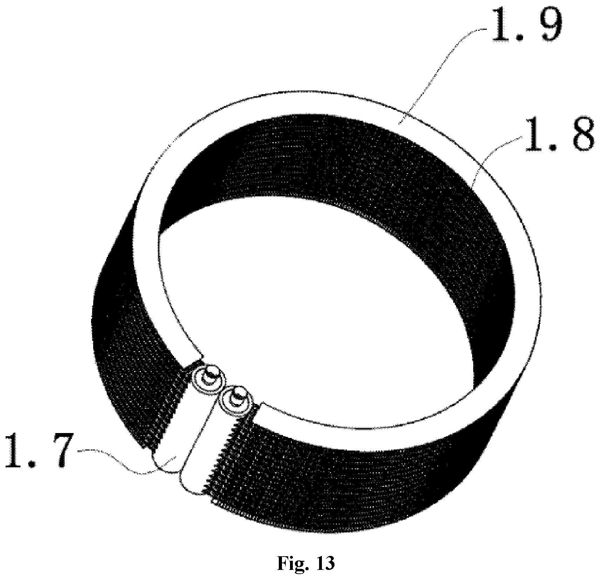

As shown in Fig. 13, different from Embodiment 8, a microchannel heat exchanger in this embodiment is of a circular shape. The circular microchannel heat exchanger is formed by bending a flat tube and a baffle plate 1.9 on a length direction. Two collection tubes of the microchannel heat exchanger are abutted against each other to form a closed loop. A fin 1.8 is disposed between the flat tube and the flat tube as well as between the flat tube and the baffle plate 1.9.

Embodiment 13

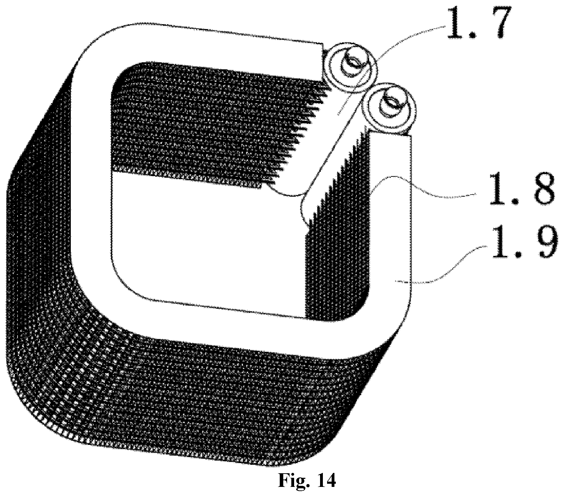

As shown in Fig. 14, different from Embodiment 8, a microchannel heat exchanger in this embodiment is of a square shape. The square microchannel heat exchanger is formed by bending a flat tube and a baffle plate 1.9 on a length direction. Two collection tubes of the microchannel heat exchanger are abutted against each other to form a closed loop. A fin 1.8 is disposed between the flat tube and the flat tube as well as between the flat tube and the baffle plate 1.9.

The above are merely specific embodiments of the invention, and the protection scope of the present invention is not limited thereto. It should be understood by the person skilled in the art that the invention includes but not limited to the accompanying drawings and the content described in the specific embodiments. Any modification without departing from a function and a structural principle of the invention is included in the scope of the claims.

**Claims**

1. A flat tube for a microchannel heat exchanger, comprising a first wallboard (1.1, 2.1, 3.1, 4.1) and a second wallboard (1.2, 2.2, 3.2, 4.2) that are formed separately, wherein the first wallboard (1.1, 2.1, 3.1, 4.1) is connected to the second wallboard (1.2, 2.2, 3.2, 4.2) to form a refrigerant circulation cavity,

   the first wallboard (1.1, 2.1, 3.1, 4.1) has a plurality of protrusion portions protruding into the refrigerant circulation cavity to form multiple refrigerant channels, arranged along a length direction of the flat tube, in the refrigerant circulation cavity;
   or the second wallboard (1.2, 2.2, 3.2, 4.2) has a plurality of protrusion portions protruding into the refrigerant circulation cavity to form multiple refrigerant channels, arranged along a length direction of the flat tube, in the refrigerant circulation cavity;
   or the first wallboard (1.1, 2.1, 3.1, 4.1) and the second wallboard (1.2, 2.2, 3.2, 4.2) both have a plurality of protrusion portions protruding into the refrigerant circulation cavity to form multiple refrigerant channels, arranged along a length direction of the flat tube, in the refrigerant circulation cavity;

each of the plurality of protrusion portions of the first wallboard (1.1, 2.1, 3.1, 4.1) is a the first protrusion, each of the plurality of protrusion portions of the second wallboard (1.2, 2.2, 3.2, 4.2) is a second protrusion,

**characterized in that** there are multiple first protrusions (1.3,3.3) and multiple second protrusions (1.4,3.4), any of three adjacent first protrusions (1.3,3.3) of the multiple first protrusions (1.3,3.3) on the first wallboard (1.1, 2.1, 3.1, 4.1) or any of three adjacent second protrusions (1.4,3.4) of the multiple second protrusions (1.4,3.4) on the second wallboard (1.2, 2.2, 3.2,

$$\theta = 2\arctan\frac{Lv}{Lh}$$

4.2) form an included angle along a refrigerant flowing direction, where the Lv is a distance between two adjacent first protrusions (1.3,3.3) of the multiple first protrusions (1.3,3.3) along a width direction of the first wallboard (1.1, 2.1, 3.1, 4.1) or two adjacent second protrusions (1.4,3.4) of the multiple second protrusions (1.4,3.4) along a width direction of the second wallboard (1.2, 2.2, 3.2, 4.2), and the Lh is a distance between the two adjacent first protrusions (1.3,3.3) along a length direction of the first wallboard (1.1, 2.1, 3.1, 4.1) or the two adjacent second protrusions (1.4,3.4) along a length direction of the second wallboard (1.2, 2.2, 3.2, 4.2).

2. The flat tube as claimed in claim 1, wherein the first protrusion (1.3,3.3) protrudes from the first wallboard (1.1, 2.1, 3.1, 4.1) to the second wallboard (1.2, 2.2, 3.2, 4.2), the second protrusion (1.4,3.4) protrudes from the second wallboard (1.2, 2.2, 3.2, 4.2) to the first wallboard (1.1, 2.1, 3.1, 4.1), and the first protrusion (1.3,3.3) and the second protrusion (1.4,3.4) are abutted against each other and connected; or the first protrusion (1.3,3.3) protrudes from the first wallboard (1.1, 2.1, 3.1, 4.1) to the second wallboard (1.2, 2.2, 3.2, 4.2), the second protrusion (1.4,3.4) protrudes from the second wallboard (1.2, 2.2, 3.2, 4.2) to the first wallboard (1.1, 2.1, 3.1, 4.1), the first protrusion (1.3,3.3) is connected to the second wallboard (1.2, 2.2, 3.2, 4.2), the second protrusion (1.4,3.4) is connected to the first wallboard (1.1, 2.1, 3.1, 4.1), and the first protrusion (1.3,3.3) and the second protrusion (1.4,3.4) are distributed in a staggered manner.

3. The flat tube as claimed in claim 2, wherein a part of the first wallboard (1.1, 2.1, 3.1, 4.1) is recessed into the refrigerant circulation cavity to form the first protrusion (1.3,3.3), a part of the second wallboard (1.2, 2.2, 3.2, 4.2) is recessed into the refrigerant circulation cavity to form the second protrusion (1.4,3.4), and the first protrusion (1.3,3.3) and the second protrusion (1.4,3.4) are 0.3 mm-1.0 mm high.

4. The flat tube as claimed in claim 3, wherein the first wallboard (1.1, 2.1, 3.1,4.1) and the second wallboard (1.2, 2.2, 3.2, 4.2) are the same in structure.

5. The flat tube as claimed in claim 1, wherein the protrusion portions protrudes from the first wallboard (1.1, 2.1, 3.1, 4.1) to the second wallboard (1.2, 2.2, 3.2, 4.2), and the protrusion portions is connected to the second wallboard (1.2, 2.2, 3.2, 4.2); or the protrusion portions protrudes from the second wallboard (1.2, 2.2, 3.2, 4.2) to the first wallboard (1.1, 2.1, 3.1, 4.1), and the protrusion portions is connected to the first wallboard (1.1, 2.1, 3.1, 4.1).

6. The flat tube as claimed in claim 5, wherein the protrusion portions is formed by recessing a part of the first wallboard (1.1, 2.1, 3.1, 4.1) into the refrigerant circulation cavity; or the protrusion portions is formed by recessing a part of the second wallboard (1.2, 2.2, 3.2, 4.2) into the refrigerant circulation cavity, and the protrusion portions is 0.5 mm-1.2 mm high.

7. The flat tube as claimed in claim 1, wherein; the included angle $\theta$ is 60°-150°.

8. The flat tube as claimed in claim 1, wherein when the protrusion portions is of a truncated cone-shaped, a top diameter Di of the protrusion portions and a bottom diameter Do of the protrusion portions meet: Do=Di+2*d*tan$\alpha$, the $\alpha$ being a draft angle of the protrusion portions; the draft angle is 10°-25°.

9. The flat tube as claimed in claim 1, wherein there are multiple protrusion portions, the multiple protrusion portions are distributed at intervals along a length direction of the flat tube in the refrigerant circulation cavity, so as to form, between adjacent protrusion portions of the multiple protrusion portions, a space for allowing mutual circulation of a refrigerant in adjacent refrigerant channels.

10. The flat tube as claimed in any one of claims 1 to 6, wherein the first wallboard (1.1, 2.1, 3.1, 4.1) has a first groove sinking towards a direction away from the second wallboard (1.2, 2.2, 3.2, 4.2), the second wallboard (1.2, 2.2, 3.2, 4.2) has a second groove sinking towards a direction away from the first wallboard (1.1, 2.1, 3.1, 4.1), and a sidewall of the first groove is connected to a sidewall of the second groove to form the refrigerant circulation cavity.

11. The flat tube as claimed in claim 10, wherein the sidewall of the first groove extends out of the first groove to form a first turnup (1.5, 2.4), the sidewall of the second groove extends out of the second groove to form a second turnup (1.6, 2.5), and the first turnup (1.5, 2.4) and the second turnup (1.6, 2.5) are connected to each other; the sidewall of the first groove and the sidewall of the second groove are at least partially overlapped to each other, and an overlapped portion is fixed by welding.

12. The flat tube as claimed in any one of claims 1 to 6, wherein the first wallboard (1.1, 2.1, 3.1, 4.1) has a groove sinking towards a direction away from the second wallboard (1.2, 2.2, 3.2, 4.2), a sidewall of the groove extends out of the groove to form a turnup, and the turnup is connected to the second wallboard (1.2, 2.2, 3.2, 4.2); or the second wallboard (1.2, 2.2, 3.2, 4.2) has a groove sinking towards a direction away from the first wallboard (1.1, 2.1, 3.1, 4.1), a sidewall of the groove extends out of the groove to form a turnup, and the turnup is connected to the first wallboard (1.1, 2.1, 3.1, 4.1).

13. The flat tube as claimed in claim 1, wherein a thickness of the first wallboard (1.1, 2.1, 3.1, 4.1) and a thickness of the second wallboard (1.2, 2.2, 3.2, 4.2) are 0.2 mm-0.8 mm.

14. A microchannel heat exchanger, comprising the flat tube as claimed in any one of claims 1 to 13.

15. The microchannel heat exchanger as claimed in claim 14, wherein the microchannel heat exchanger is of a straight panel shape, a circular shape, a square shape, an L shape, a U shape or a V shape.

**Patentansprüche**

1. Flachrohr für einen Mikrokanalwärmetauscher, umfassend eine erste Wandplatte (1.1, 2.1, 3.1, 4.1) und eine zweite Wandplatte (1.2, 2.2, 3.2, 4.2), die separat gebildet sind, wobei die erste Wandplatte (1.1, 2.1, 3.1, 4.1) mit der zweiten Wandplatte (1.2, 2.2, 3.2, 4.2) verbunden ist, um einen Kühlmittelzirkulationshohlraum zu bilden,

    die erste Wandplatte (1.1, 2.1, 3.1, 4.1) eine Vielzahl von Vorsprungsabschnitten aufweist, die in den Kühlmittelzirkulationshohlraum ragen, um mehrere Kühlmittelkanäle zu bilden, die entlang einer Längsrichtung des Flachrohres in dem Kühlmittelzirkulationshohlraum angeordnet sind; oder die zweite Wandplatte (1.2, 2.2, 3.2, 4.2) eine Vielzahl von Vorsprungsabschnitten aufweist, die in den Kühlmittelzirkulationshohlraum ragen, um mehrere Kühlmittelkanäle zu bilden, die entlang einer Längsrichtung des Flachrohres in dem Kühlmittelzirkulationshohlraum angeordnet sind; oder die erste Wandplatte (1.1, 2.1, 3.1, 4.1) und die zweite Wandplatte (1.2, 2.2, 3.2, 4.2) beide eine Vielzahl von Vorsprungsabschnitten aufweisen, die in den Kühlmittelzirkulationshohlraum ragen, um mehrere Kühlmittelkanäle zu bilden, die entlang einer Längsrichtung des Flachrohres in dem Kühlmittelzirkulationshohlraum angeordnet sind;
    jeder aus der Vielzahl von Vorsprungsabschnitten der ersten Wandplatte (1.1, 2.1, 3.1, 4.1) ein erster Vorsprung ist, jeder aus der Vielzahl von Vorsprungsabschnitten der zweiten Wandplatte (1.2, 2.2, 3.2, 4.2) ein zweiter Vorsprung ist, **dadurch gekennzeichnet, dass** es mehrere erste Vorsprünge (1.3, 3.3) und mehrere zweite Vorsprünge (1.4, 3.4) gibt, wobei beliebige von drei benachbarten ersten Vorsprüngen (1.3, 3.3) der mehreren ersten Vorsprünge (1.3, 3.3) auf der ersten Wandplatte (1.1, 2.1, 3.1, 4.1) oder beliebige von drei benachbarten zweiten Vorsprüngen (1.4, 3.4) der mehreren zweiten Vorsprünge (1.4, 3.4) auf der zweiten Wandplatte (1.2, 2.2, 3.2, 4.2) einen eingeschlossenen Win-

$$\theta = 2 \arctan \frac{Lv}{Lh}$$

kel entlang einer Kühlmittelströmungsrichtung bilden, wobei das Lv ein Abstand zwischen zwei benachbarten ersten Vorsprüngen (1.3, 3.3) der mehreren ersten Vorsprünge (1.3, 3.3) entlang einer Breitenrichtung der ersten Wandplatte (1.1, 2.1, 3.1, 4.1) oder zwei benachbarten zweiten Vorsprüngen (1.4, 3.4) der mehreren zweiten Vorsprünge (1.4, 3.4) entlang einer Breitenrichtung der zweiten Wandplatte (1.2, 2.2, 3.2, 4.2) ist und das Lh ein Abstand zwischen den zwei benachbarten ersten Vorsprüngen (1.3, 3.3) entlang einer Längsrichtung der ersten Wandplatte (1.1, 2.1, 3.1, 4.1) oder den zwei benachbarten zweiten Vorsprüngen (1.4, 3.4) entlang einer Längsrichtung der zweiten Wandplatte (1.2, 2.2, 3.2, 4.2) ist.

2. Flachrohr nach Anspruch 1, wobei der erste Vorsprung (1.3, 3.3) von der ersten Wandplatte (1.1, 2.1, 3.1, 4.1) zu der zweiten Wandplatte (1.2, 2.2, 3.2, 4.2) ragt, der zweite Vorsprung (1.4, 3.4) von der zweiten Wandplatte (1.2, 2.2, 3.2, 4.2) zu der ersten Wandplatte (1.1, 2.1, 3.1, 4.1) ragt und der erste Vorsprung (1.3, 3.3) und der zweite Vorsprung (1.4, 3.4) aneinander stoßen und verbunden sind; oder der erste Vorsprung (1.3, 3.3) von der ersten Wandplatte (1.1, 2.1, 3.1, 4.1) zu der zweiten Wandplatte (1.2, 2.2, 3.2, 4.2) ragt, der zweite Vorsprung (1.4, 3.4) von der zweiten Wandplatte (1.2, 2.2, 3.2, 4.2) zu der ersten Wandplatte (1.1, 2.1, 3.1, 4.1) ragt, der erste Vorsprung (1.3, 3.3) mit der zweiten Wandplatte (1.2, 2.2, 3.2, 4.2) verbunden ist, der zweite Vorsprung (1.4,3.4) mit der ersten Wandplatte (1.1, 2.1, 3.1, 4.1) verbunden ist und der erste Vorsprung (1.3,3.3) und der zweite Vorsprung (1.4,3.4) auf eine gestaffelte Weise verteilt sind.

3. Flachrohr nach Anspruch 2, wobei ein Teil der ersten Wandplatte (1.1, 2.1, 3.1, 4.1) in den Kühlmittelzirkulationshohlraum eingelassen ist, um den ersten Vorsprung (1.3,3.3) zu bilden, ein Teil der zweiten Wandplatte (1.2, 2.2, 3.2, 4.2) in den Kühlmittelzirkulationshohlraum eingelassen ist, um den zweiten Vorsprung (1.4,3.4) zu bilden, und der erste Vorsprung (1.3,3.3) und der zweite Vorsprung (1.4,3.4) 0,3 mm-1,0 mm hoch sind.

4. Flachrohr nach Anspruch 3, wobei die erste Wandplatte (1.1, 2.1, 3.1, 4.1) und die zweite Wandplatte (1.2, 2.2, 3.2, 4.2) in der Struktur gleich sind.

5. Flachrohr nach Anspruch 1, wobei die Vorsprungsabschnitte von der ersten Wandplatte (1.1, 2.1, 3.1, 4.1) zu der zweiten Wandplatte (1.2, 2.2, 3.2, 4.2) vorstehen und die Vorsprungsabschnitte mit der zweiten Wandplatte (1.2, 2.2, 3.2, 4.2) verbunden sind; oder die Vorsprungsabschnitte von der zweiten Wandplatte (1.2, 2.2, 3.2, 4.2) zu der ersten Wandplatte (1.1, 2.1, 3.1, 4.1) vorstehen und die Vorsprungsabschnitte mit der ersten Wandplatte (1.1, 2.1, 3.1, 4.1) verbunden sind.

6. Flachrohr nach Anspruch 5, wobei die Vorsprungsabschnitte durch Einsenken eines Teils der ersten Wandplatte (1.1, 2.1, 3.1, 4.1) in den Kühlmittelzirkulationshohlraum gebildet sind; oder die Vorsprungsabschnitte durch Einsenken eines Teils der zweiten Wandplatte (1.2, 2.2, 3.2, 4.2) in den Kühlmittelzirkulationshohlraum gebildet sind und die Vorsprungsabschnitte 0,5 mm-1,2 mm hoch sind.

7. Flachrohr nach Anspruch 1, wobei der eingeschlossene Winkel θ 60°-150° ist.

8. Flachrohr nach Anspruch 1, wobei, wenn die Vorsprungsabschnitte kegelstumpfförmig sind, ein oberer Durchmesser Di der Vorsprungsabschnitte und ein unterer Durchmesser Do der Vorsprungsabschnitte zusammentreffen: $Do=Di+2*d*tan\alpha$, wobei das $\alpha$ ein Entformungswinkel der Vorsprungsabschnitte ist; wobei der Entformungswinkel 10°-25° ist.

9. Flachrohr nach Anspruch 1, wobei es mehrere Vorsprungsabschnitte gibt, die mehreren Vorsprungsabschnitte in Intervallen entlang einer Längsrichtung des Flachrohres in dem Kühlmittelzirkulationshohlraum verteilt sind, um zwischen benachbarten Vorsprungsabschnitten der mehreren Vorsprungsabschnitte einen Raum zu bilden, um gegenseitige Zirkulation eines Kühlmittels in benachbarten Kühlmittelkanälen zu ermöglichen.

10. Flachrohr nach einem der Ansprüche 1 bis 6, wobei die erste Wandplatte (1.1, 2.1, 3.1, 4.1) eine erste Nut aufweist, die in eine Richtung weg von der zweiten Wandplatte (1.2, 2.2, 3.2, 4.2) abfällt, die zweite Wandplatte (1.2, 2.2, 3.2, 4.2) eine zweite Nut aufweist, die in eine Richtung weg von der ersten Wandplatte (1.1, 2.1, 3.1, 4.1) abfällt, und eine Seitenwand der ersten Nut mit einer Seitenwand der zweiten Nut verbunden ist, um den Kühlmittelzirkulationshohlraum zu bilden.

11. Flachrohr nach Anspruch 10, wobei sich die Seitenwand der ersten Nut aus der ersten Nut erstreckt, um eine erste Umschlagform (1.5, 2.4) zu bilden, sich die Seitenwand der zweiten Nut aus der zweiten Nut erstreckt, um eine zweite Umschlagform (1.6, 2.5) zu bilden, und die erste Umschlagform (1.5, 2.4) und die zweite Umschlagform (1.6, 2.5) miteinander verbunden sind; wobei die Seitenwand der ersten Nut und die Seitenwand der zweiten Nut einander zumindest teilweise überlappen und ein überlappter Abschnitt durch Schweißen fixiert ist.

12. Flachrohr nach einem der Ansprüche 1 bis 6, wobei die erste Wandplatte (1.1, 2.1, 3.1, 4.1) eine Nut aufweist, die in eine Richtung weg von der zweiten Wandplatte (1.2, 2.2, 3.2, 4.2) abfällt, sich eine Seitenwand der Nut aus der Nut erstreckt, um eine Umschlagform zu bilden, und die Umschlagform mit der zweiten Wandplatte (1.2, 2.2, 3.2, 4.2) verbunden ist; oder die zweite Wandplatte (1.2, 2.2, 3.2, 4.2) eine Nut aufweist, die in eine Richtung weg von der ersten Wandplatte (1.1, 2.1, 3.1, 4.1) abfällt, sich eine Seitenwand der Nut aus der Nut erstreckt, um eine Umschlagform zu bilden, und die Umschlagform mit der ersten Wandplatte (1.1, 2.1, 3.1, 4.1) verbunden ist.

13. Flachrohr nach Anspruch 1, wobei eine Dicke der ersten Wandplatte (1.1, 2.1, 3.1, 4.1) und eine Dicke der zweiten Wandplatte (1.2, 2.2, 3.2, 4.2) 0,2 mm-0,8 mm sind.

14. Mikrokanalwärmetauscher, der das Flachrohr nach einem der Ansprüche 1 bis 13 umfasst.

15. Mikrokanalwärmetauscher nach Anspruch 14, wobei der Mikrokanalwärmetauscher von einer geraden Plattenform, einer kreisförmigen Form, einer quadratischen Form, einer L-Form, einer U-Form oder einer V-Form ist.

## Revendications

1. Tube plat pour échangeur de chaleur à microcanaux, comprenant un premier panneau mural (1.1, 2.1, 3.1, 4.1) et un second panneau mural (1.2, 2.2, 3.2, 4.2) qui sont formés séparément, dans lequel le premier panneau mural (1.1, 2.1, 3.1, 4.1) est relié au second panneau mural (1.2, 2.2, 3.2, 4.2) pour former une cavité de circulation de réfrigérant,

   le premier panneau mural (1.1, 2.1, 3.1, 4.1) comporte une pluralité de parties en saillie faisant saillie dans la cavité de circulation de réfrigérant pour former de multiples canaux de réfrigérant, disposés dans un sens de la longueur du tube plat, dans la cavité de circulation de réfrigérant ;
   ou le second panneau mural (1.2, 2.2, 3.2, 4.2) comporte une pluralité de parties en saillie faisant saillie dans la cavité de circulation de réfrigérant pour former de multiples canaux de réfrigérant, disposés dans un sens de la longueur du tube plat, dans la cavité de circulation de réfrigérant ;
   ou le premier panneau mural (1.1, 2.1, 3.1, 4.1) et le second panneau mural (1.2, 2.2, 3.2, 4.2) comportent tous deux une pluralité de parties en saillie faisant saillie dans la cavité de circulation de réfrigérant pour former de multiples canaux de réfrigérant, disposés dans un sens de la longueur du tube plat, dans la cavité de circulation de réfrigérant ;
   chacune de la pluralité de parties en saillie du premier panneau mural (1.1, 2.1, 3.1, 4.1) est une première saillie, chacune de la pluralité de parties en saillie du second panneau mural (1.2, 2.2, 3.2, 4.2) est une seconde saillie, **caractérisé en ce qu'**il existe de multiples premières saillies (1.3, 3.3) et de multiples secondes saillies (1.4, 3.4), n'importe lesquelles des trois premières saillies adjacentes (1.3, 3.3) des multiples premières saillies (1.3, 3.3) sur le premier panneau mural (1.1, 2.1, 3.1, 4.1) ou n'importe lesquelles des trois secondes saillies adjacentes (1.4, 3.4) des multiples secondes saillies (1.4, 3.4) sur le second panneau mural (1.2, 2.2, 3.2, 4.2) forment un angle inclus

   $$\theta = 2 \arctan \frac{Lv}{Lh}$$ dans un sens d'écoulement du réfrigérant, où Lv est une distance entre deux premières saillies adjacentes (1.3, 3.3) des multiples premières saillies (1.3, 3.3) dans un sens de la largeur du premier panneau mural (1.1, 2.1, 3.1, 4.1) ou deux secondes saillies adjacentes (1.4, 3.4) des multiples secondes saillies (1.4, 3.4) dans un sens de la largeur du second panneau mural (1.2, 2.2, 3.2, 4.2), et Lh est une distance entre les deux premières saillies adjacentes (1.3, 3.3) dans un sens de la longueur du premier panneau mural (1.1, 2.1, 3.1, 4.1) ou les deux secondes saillies adjacentes (1.4, 3.4) dans un sens de la longueur du second panneau mural (1.2, 2.2, 3.2, 4.2).

2. Tube plat selon la revendication 1, dans lequel la première saillie (1.3, 3.3) fait saillie du premier panneau mural (1.1, 2.1, 3.1, 4.1) au second panneau mural (1.2, 2.2, 3.2, 4.2), la seconde saillie (1.4, 3.4) fait saillie du second panneau mural (1.2, 2.2, 3.2, 4.2) au premier panneau mural (1.1, 2.1, 3.1, 4.1), et la première saillie (1.3, 3.3) et la seconde saillie (1.4, 3.4) sont en butée l'une contre l'autre et reliées ; ou la première saillie (1.3, 3.3) fait saillie du premier panneau mural (1.1, 2.1, 3.1, 4.1) au second panneau mural (1.2, 2.2, 3.2, 4.2), la seconde saillie (1.4, 3.4) fait saillie du second panneau mural (1.2, 2.2, 3.2, 4.2) au premier panneau mural (1.1, 2.1, 3.1, 4.1), la première saillie (1.3, 3.3) est reliée au second panneau mural (1.2, 2.2, 3.2, 4.2), la seconde saillie (1.4, 3.4) est reliée au premier panneau mural (1.1, 2.1, 3.1, 4.1), et la première saillie (1.3, 3.3) et la seconde saillie (1.4, 3.4) sont réparties de manière décalée.

3. Tube plat selon la revendication 2, dans lequel une partie du premier panneau mural (1.1, 2.1, 3.1, 4.1) est encastrée dans la cavité de circulation de réfrigérant pour former la première saillie (1.3, 3.3), une partie du second panneau mural (1.2, 2.2, 3.2, 4.2) est encastrée dans la cavité de circulation de réfrigérant pour former la seconde saillie (1.4, 3.4), et la première saillie (1.3, 3.3) et la seconde saillie (1.4, 3.4) ont une hauteur de 0,3 mm à 1,0 mm.

4. Tube plat selon la revendication 3, dans lequel le premier panneau mural (1.1, 2.1, 3.1, 4.1) et le second panneau mural (1.2, 2.2, 3.2, 4.2) ont la même structure.

5. Tube plat selon la revendication 1, dans lequel les parties en saillie font saillie du premier panneau mural (1.1, 2.1, 3.1, 4.1) au second panneau mural (1.2, 2.2, 3.2, 4.2), et les parties en saillie sont reliées au second panneau mural (1.2, 2.2, 3.2, 4.2) ; ou les parties en saillie font saillie du second panneau mural (1.2, 2.2, 3.2, 4.2) au premier panneau mural (1.1, 2.1, 3.1, 4.1), et les parties en saillie sont reliées au premier panneau mural (1.1, 2.1, 3.1, 4.1).

6. Tube plat selon la revendication 5, dans lequel les parties en saillie sont formées en encastrant une partie du premier panneau mural (1.1, 2.1, 3.1, 4.1) dans la cavité de circulation de réfrigérant ; ou les parties en saillie sont formées en encastrant une partie du second panneau mural (1.2, 2.2, 3.2, 4.2) dans la cavité de circulation de réfrigérant, et les parties en saillie ont une hauteur de 0,5 mm à 1,2 mm.

7. Tube plat selon la revendication 1, dans lequel ; l'angle inclus θ est de 60° à 150°.

8. Tube plat selon la revendication 1, dans lequel lorsque les parties en saillie sont en forme de cône tronqué, un diamètre supérieur Di des parties en saillie et un diamètre inférieur Do des parties en saillie respectent : Do=Di+2*d*tanα, α étant un angle de dépouille des parties en saillie ; l'angle de dépouille est de 10° à 25°.

9. Tube plat selon la revendication 1, dans lequel il existe de multiples parties en saillie, les multiples parties en saillie sont réparties à intervalles dans un sens de la longueur du tube plat dans la cavité de circulation de réfrigérant, de manière à former, entre des parties en saillie adjacentes des multiples parties en saillie, un espace pour permettre la circulation mutuelle d'un réfrigérant dans des canaux de réfrigérant adjacents.

10. Tube plat selon l'une quelconque des revendications 1 à 6, dans lequel le premier panneau mural (1.1, 2.1, 3.1, 4.1) comporte une première rainure s'enfonçant dans une direction s'éloignant du second panneau mural (1.2, 2.2, 3.2, 4.2), le second panneau mural (1.2, 2.2, 3.2, 4.2) comporte une seconde rainure s'enfonçant dans une direction s'éloignant du premier panneau mural (1.1, 2.1, 3.1, 4.1), et une paroi latérale de la première rainure est reliée à une paroi latérale de la seconde rainure pour former la cavité de circulation de réfrigérant.

11. Tube plat selon la revendication 10, dans lequel la paroi latérale de la première rainure s'étend hors de la première rainure pour former un premier retournement (1.5, 2.4), la paroi latérale de la seconde rainure s'étend hors de la seconde rainure pour former un second retournement (1.6, 2.5), et le premier retournement (1.5, 2.4) et le second retournement (1.6, 2.5) sont reliés l'un à l'autre ; la paroi latérale de la première rainure et la paroi latérale de la seconde rainure se chevauchent au moins partiellement l'une l'autre, et une partie chevauchée est fixée par soudage.

12. Tube plat selon l'une quelconque des revendications 1 à 6, dans lequel le premier panneau mural (1.1, 2.1, 3.1, 4.1) comporte une rainure s'enfonçant dans une direction s'éloignant du second panneau mural (1.2, 2.2, 3.2, 4.2), une paroi latérale de la rainure s'étend hors de la rainure pour former un retournement, et le retournement est relié au second panneau mural (1.2, 2.2, 3.2, 4.2) ; ou le second panneau mural (1.2, 2.2, 3.2, 4.2) comporte une rainure s'enfonçant dans une direction s'éloignant du premier panneau mural (1.1, 2.1, 3.1, 4.1), une paroi latérale de la rainure s'étend hors de la rainure pour former un retournement, et le retournement est relié au premier panneau mural (1.1, 2.1, 3.1, 4.1).

13. Tube plat selon la revendication 1, dans lequel une épaisseur du premier panneau mural (1.1, 2.1, 3.1, 4.1) et une épaisseur du second panneau mural (1.2, 2.2, 3.2, 4.2) sont de 0,2 mm à 0,8 mm.

14. Échangeur de chaleur à microcanaux, comprenant le tube plat selon l'une quelconque des revendications 1 à 13.

15. Échangeur de chaleur à microcanaux selon la revendication 14, dans lequel l'échangeur de chaleur à microcanaux est en forme de panneau droit, en forme circulaire, en forme carrée, en forme en L, en forme en U ou en forme en V.

**Fig. 1**

**Fig. 2**

**Fig. 3**

**Fig. 4**

**Fig. 5**

1.8 1.9

1.10

1.7

**Fig. 9**

1.9 1.8

**Fig. 10**

Fig. 11

Fig. 12

1.9

1.8

1.7

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004003855 A
- JP H09310989 A
- EP 1022532 A2
- WO 2008091918 A1
- CN 101050925 A
- JP H0719774 A
- JP H1019494 A
- JP 2000205784 A
- JP 2006266528 A
- JP H1085879 A
- JP 2012149789 A